# EUROPEAN PATENT APPLICATION

(11) **EP 1 661 956 A1**
(43) Date of publication of application: **31.05.2006**
(21) Application number: 04748287.2
(22) Date of filing: 04.08.2004
(51) Int. Cl.: C09D 5/16, C09D 7/12, C09D 201/00

(54) **ADDITIVE FOR SHIP BOTTOM PAINT AND SHIP BOTTOM PAINT COMPRISING THE SAME**

(30) Priority: 05.08.2003 US 492797 P; 24.10.2003 JP 2003365020
(71) Applicant: Yamazaki, Shunichi, Suwa-shi, Nagano 392-0027 (JP); Okuda, Minoru, Matsumoto-shi, Nagano 390-0221 (JP)
(72) Inventor: Yamazaki, Shunichi, Suwa-shi, Nagano 392-0027 (JP); Okuda, Minoru, Matsumoto-shi, Nagano 390-0221 (JP)
(74) Representative: Patentanwälte Ruff, Wilhelm, Beier, Dauster & Partner
(86) International application number: PCT/JP2004/011497
(87) International publication number: WO 2005/012441

(57) **Abstract**

An additive for a ship bottom paint, **characterized in that** it comprisees a fly ash being pulverized so as to have a particle size of 1 to 12 µm on average and a dried powder of diatormaceous earth, preferably a beer yeast diatomaceous earth in a weight ratio of the pulverized fly ash and the diatomaceous earth powder of (7 to 3) : 1; and a ship bottom paint comprising the additive.

## Description

### [Field of Technique]

This invention concerns ship bottom paint additives to reduce shellfish and other marine life attaching to ship bottoms, and ship bottom paints that contain this particular additive.

### [Background of the invention]

Shellfish and other marine life that attach to the bottoms of ships, marine structures, and various equipment and devices used in the ocean, decrease the functionality of these structures over time. In an effort to address this problem, several types of paints have been suggested to prevent shellfish and other marine life attachment.
In the past, paint with organotin compounds such as tributyltine were proposed and used to prevent shellfish attachment. However, marine contamination due to the organotin compounds has become problematic in recent years, and the use of such paints has been banned.

JP 11-349974-A1 proposes algae-resistant/shellfish-resistant paint made by evenly mixing inorganic antimicrobial agents including silver and/or copper with water- resistant paint. JP 8-218004-A1 proposes anti-algae- and -shellfish-attachment paint that contains far-infrared ray radioactive ingredients such as ceramics, minus-ion radioactive materials like tourmaline, and garlic powder. JP 2001-29818-A1 suggests biofouling resistant paint made of conductive paint mixed with magnetic materials.

However, paints described in these patent literature contain expensive components. Furthermore, those of JP 11-349974-A1 and JP 2001-29818-A1 produce a heavy coating due to a metal-containing paint, and cannot achieve an excellent effect in such a way that is expected.

### [Disclosure of the Invention]

### [Subject to be Solved by the Invention]

Therefore, the present invention provides a ship bottom paint additive using inexpensive lightweight materials to prevent or reduce shellfish or other marine life attachment to the bottoms of ships, and ship bottom paints with this particular additive.

### [Means for Solving Said Subject]

The inventors found that said subject is solved, if a ship bottom paint additive is prepared from fly ash ground at an average of 1-12µm granularity mixed with dry diatom earth such as beer yeast diatom earth, the mixture having a weight ratio within the range of 3:1 to 7:1. Preferably, the diatom earth is beer yeast diatom earth.
The present invention also concerns ship bottom paint that has the above-described additive added as 3-10% by weight of the paint solid content.

### [Effect Achieved by the Present Invention]

The inventive additive is highly effective in preventing or reducing the attachment of shellfish and algae to ship bottoms and marine structures, and is inexpensive. In addition, this invention also provides a solution to waste disposal processing as fly ash and diatom earth, preferably beer yeast diatom earth are all process waste materials, and these materials form the ingredients of the additive of the present invention. Furthermore, as these two materials are both relatively light in weight, the painted layer is also relatively light in weight and exerts a minimal impact on the painted ship.

### [Detailed Description of the Preferred Embodiment]

Fly ash refers to fine spherical ash particles, which are present in the chimney fumes of coal kindling boilers of coal-fired powder stations. The diameter of fly ash ranges from 1 to 200 µm with an average size of approximately 20 µm. Silica and alumina typically form the major components of fly ash, accounting for approximately 70-80% by weight. Fly ash also contains small amounts of iron oxides, as well as Mg, Ca, P and Ti oxides as trace materials. It also contains non-crystal (glassy) materials that are generated when molten materials are cooled down rapidly, and crystal minerals such as quartz and mullite. It is also known for the inclusion of low-crystal allophane that is mainly composed of hydrated aluminum silicate.

The fly ash applied in the current invention is ground to an average particle size of about 1-12 µm, preferably 1-8 µm, more preferably 1-5 µm, and most preferably 2-4 µm. The fly ash can be ground with a jet grinder. If the average granularity is less than 1 µm, the grinding cost becomes excessive and it is very difficult to mix the fly ash with paint. Conversely, if the average fly ash particle size is significantly greater than 12 µm, the effectiveness of the additive may be reduced.

The diatom earth used in this invention has such granularity that its powder can be well mixed with the fly ash used in this invention, and a preferable granularity is 1-100 µm. If the diatom earth powder is the dry powder of beer yeast diatom earth, the powder produced by drying beer diatom earth used for filtering beer yeast used for beer fermentation can be used.

The mixing ratio of fly ash and dry powder of diatom earth, preferably beer diatom earth may be from 3-7 to 1. A ratio of 4-6 to 1 is preferable, with 5 to 1 being more preferred. It is also known that the effectiveness of the present invention may be reduced if the ratio of fly ash to dry powder of diatom earth or beer yeast diatom earth is greater than 7 to 1 or smaller than 3 to 1.

The ship bottom paint additive in this invention can be manufactured by mechanically mixing ground fly ash having an average particle size of 1 to 12 µm with the dray powder of diatom earth using a mixing machine or mixing by hand in container. It is important that these two ingredients be sufficiently mixed together.

By adding the above-described additive of this invention to ship bottom paint at 3-10% by weight, preferably at 3-8% by weight, and more preferably 4-7% by weight of the paint solid content, shellfish, algae, and other marine life attachment to the painted bottom of the ship can be decreased or perhaps even substantially prevented. Even if the said additive is added in an amount more than 10% by weight of the paint solid content, shellfish, algae, and other marine life attachment to the painted bottom of the ship can be decreased or perhaps even substantially prevented, but the strength of the painted layer may be decreased with the increase of the amount of the additive.

The effectiveness that can be achieved with the additive is not fully understood in theory. Through trial and error, the applicants focused on allophone present in the fly ash and, in such case where diatom earth is beer yeast diatom earth, yeast that lives in the dry powder of beer yeast diatom earth, mixed both components at the above-described mixing ratios, and discovered that a proper amount of mixed components blended into paint could yield a positive effect.

The inventive paint is ship bottom paint, which preferably may be usually applied to the ship bottom, including the water line, as under coat, intermediate coat and top coat or as putty. The additive in this invention can be used, for example, with urethane paint such as KC Epo-elast for intermediate coat, KC Epo-elast 50 and KC Epo-elast 100 (Kansai Paint Co. Ltd.); chlorinated rubber resin, such as Lava-Marine AF and Lava-Marine (Kansai Paint Co. Ltd.); epoxy resin such as KC Primer, KC Epo-NC and KC Epo for intermediate coat (Kansai Paint Co. Ltd.), vinyl tar epoxy corrosion-resistant paint, non-tar epoxy resin heavy duty corrosion-resistant paint; vinyl stain-resistant paint; acrylic stain-resistant paint; water-biodegradable paint such as New Calent and NU-CREST (Kansai Paint Co. Ltd.); or chlorinated polyolefin (chloride rubber) paint. The additive in this invention also may be mixed into primers for application, but mixing into top coat or under coat, which is applied to a surface on which shellfish and other marine life attachment attach easily, or adjacent field thereof.

In addition to the additive of the present invention, the paint may also contain one or more of the following ingredients: thermoplastic resin, various types of plastic agents, body pigments, color pigments, anticorrosion pigments, solvents, hardening accelerator, viscosity modifier, thixo agent (anti-drip agent) and sedimentation-resistant agent.

The pints in this invention may be airless-sprayed to the ship bottom, including the water line, or applied by normal methods such as air spraying, brush painting or roller painting.

The paint volume used may vary depending on the type of ship, the number of paint layers, and the combination of paints. Generally speaking, the paint volume may be 100g-800g/m², and the dried paint layer should be at a thickness of 30-500µm, with 50-300µm being more preferable.

The paints contained the inventive additive may also be effectively used for coating underwater structures such as floats, bridges and other marine structures.

An example of the present invention is described below. This invention, however, is not limited to the following example.

### Example 1:

### Manufacturing of Ship Bottom Paint Additive:

A) Manufacturing of Ground Fly Ash:
(1) Fly ash with an average granularity of 34.66µm with the granularity distribution shown in Table 1 was ground in a jet grinder to an average granularity of 2.53µm with the granularity distribution also shown in Table 1.

**Table 1**

| Granularity distribution | 10% | 20% | 30% | 40% | 50% | 60% | 70% | 80% | 90% | 99% |
|---|---|---|---|---|---|---|---|---|---|---|
| Fly ash-raw material | 4.30 µm | 7.36 µm | 11.58 µm | 17.29 µm | 23.46 µm | 30.92 µm | 40.75 µm | 54.54 µm | 79.24 µm | 175.2 µm |
| Ground fly ash | 1.56 µm | 1.82 µm | 2.04 µm | 2.24 µm | 2.43 µm | 2.64 µm | 2.87 µm | 3.16 µm | 3.60 µm | 4.94 µm |

(2) Fly ash was ground in the same manner as described above in (1) to an average granularity of 4.17µm, with a granularity distribution shown in Table 2.

**Table 2**

| Granularity distribution | 10% | 20% | 30% | 40% | 50% | 60% | 70% | 80% | 90% | 99% |
|---|---|---|---|---|---|---|---|---|---|---|
| Ground fly ash | 3.66 µm | 4.42 µm | 5.01 µm | 5.53 µm | 6.03 µm | 6.55 µm | 7.13 µm | 7.87 µm | 9.03 µm | 12.0 µm |

(3) Fly ash was ground in the same manner as described above in (1) to an average granularity of 1.91µm, with a granularity distribution shown in Table 3.

**Table 3**

| Granularity distribution | 10% | 20% | 30% | 40% | 50% | 60% | 70% | 80% | 90% | 99% |
|---|---|---|---|---|---|---|---|---|---|---|
| Ground fly ash | 1.62 µm | 1.89 µm | 2.12 µm | 2.34 µm | 2.56 µm | 2.79 µm | 3.06 µm | 3.40 µm | 3.90 µm | 5.39 µm |

B) Manufacturing of Beer Yeast Diatom Earth:
Used beer yeast diatom earth that was obtained from beer manufacturers was dried for two weeks. The dried beer yeast diatom earth was then ground to powder with an average granularity of 7.1 µm.

C) Additive Manufacturing Preparations:
50 Parts by weight of the ground fly ash described in (1) above was mixed with 10 parts by weight of the beer diatom yeast diatom earth powder in a mixer to make ship bottom paint additive 1).
70 Parts by weight of the ground fly ash described in (2) above was mixed with 10 parts by weight of the beer diatom yeast diatom earth powder in a mixer to make ship bottom paint additive 2).
40 Parts by weight of the ground fly ash described in (3) above was mixed with 10 parts by weight of the beer diatom yeast diatom earth powder in a mixer to make ship bottom paint additive 3).

### Manufacturing of Ship Bottom Paint:

1) Manufacturing of Paint A
   600 Parts by weight of epoxy resin, KC Barrier (Kansai Paint Co. Ltd.), 100Parts by weight of rosin, 100 parts by weight of talc, 100 parts by weight of titanium dioxide, 50 parts by weight of colcothar, and 50 parts by weight of thixo agent were blended until they were evenly mixed.
2) Manufacturing of Paint B
   700 Parts by weight of chlorinated rubber resin, Lava-Marine AF (Kansai Paint Co. Ltd.), 50 parts by weight of colcothar, and 50 parts by weight of thixo agent were blended until they were evenly mixed.
3) Manufacturing of Paint C
   700 Parts by weight of urethane resin, KC Epo-erast (Kansai Paint Co. Ltd.), 250 parts by weight of talc, and 50 parts by weight of thixo agent were blended until they were evenly mixed.

Paints A, B, and C were respectively blended with the above-described ship bottom paint additives (1), (2) and (3) at the mixing ratios shown in Table 4. Using those blended ship bottom paints, the following test was performed.

### Ship Bottom Paint Performance Test:

This test was performed basically in accordance with JIS K 5630. In this regard, 300 mm x 300 mm x 3.2 mm sized hot rolled soft steel strips were cleaned with paint thinner to remove oil and other contaminants. After the strips were dried, they were sandblasted to remove mill-scale powder and rust, etc., resulting in a gray white finish with a roughness of 70S. These test strips were stored in such a way that humidity can be avoided, and SD Zinc 1000HA was brush-painted one time as an under-layer, according to JIS K 5400, at a thickness of 13.5 µm when dried. After the paint was dry, vinyl chloride resin paint for steel ship external shells was brush-painted 4 times over the under-layer according to JIS K 5634 to obtain a 105µm dry layer. Finally, the above-described blended paints A, B, and C were respectively brush-painted two times to obtain a 40µm dry layer each. In this way the shellfish attachment test strips were prepared. Using these test strips, ocean immersion tests were performed in the ocean according to JIS K 5630 for 6 months and one year, and the shellfish attachment conditions were measured. Three test strips were created for each test paint. Average measurement results are shown in Table 4.

### Shellfish Attachment Test:

: No attached shellfish or maximum of 4 pieces of attached shellfish
○: 5 to 10 pieces of attached shellfish
□: 11 to 20 pieces of attached shellfish
×: Numerous pieces of attached shellfish

**Table 4:**

| Test Strip Number | Paint | | Additive | | Shellfish Attachment Prevention Performance | |
|---|---|---|---|---|---|---|
| | Type | Amount (weight%) | Additive Number | Additive Aamount (weight%) | 6 months | 1 year |
| 1 (Comp. Ex.) | A | 100 | | 0 | × | |
| 2 | A | 95 | 1 | 5 | □ | □ |
| 3 | A | 93 | 1 | 7 | □ | □ |
| 4 | A | 97 | 1 | 3 | □ | o |
| 5(Comp. Ex.) | A | 98 | 1 | 2 | o | □ |
| 6(Comp. Ex.) | B | 99 | 2 | 1 | □ | -- |
| 7 | B | 93 | 2 | 7 | □ | □ |
| 8 | B | 95 | 2 | 5 | □ | □ |
| 9(Comp. Ex.) | C | 90 | 3 | 13 | □ | × |
| 10 | C | 92 | 3 | 3 | □ | o |
| 11 | C | 94 | 3 | 6 | □ | □ |
| 12(Comp. Ex.) | C | 98 | 3 | 11 | o | □ |

As shown in the above test data, when Test Strips 5 and 6 with additive at less than 3% by weight were used, we were able to obtain some expected level of effectiveness, but they were not considered satisfactory. When test Strips 9 and 12, with the additive at more than 10% by weight, were used, only slight effectiveness was demonstrated, but it was also not satisfactory, and the strength of the painted layer was decreased. Furthermore, in the case of test Strip 9, the miscibility of the additive with the paint was unsatisfactory. Test Strips 2-4, 7-8, 10 and 11 had 3-10% by weight of the additive and demonstrated the effect of the additive of the present invention regardless of the paint types used. Test Strip 1 shows the test result of Paint A that had no amount of this additive. Based on these results, it can be concluded that paints that included the additive of the present invention at levels more or less than the range specified in this invention can show some degree of the effectiveness. However, the satisfactory results related to preventing or reducing shellfish or other marine life attachment, to the strength of the painted layer and to the miscibility of the additive with paints are achieved only when the used amount of the additive is within the range of 3 to 10% by weight.

## Claims

1. A ship bottom paint additive comprising a fly ash powder ground at an average granularity of 1-12µm and a dry diatom earth, the weight ratio of the ground fly ash powder to the dry diatom earth being within the range of 3:1 to 7:1.

2. The ship bottom paint additive claimed in claim 1, wherein the dry diatom earth is a beer diatom earth.

3. A ship bottom paint containing the additive claimed in claim 1 or 2, in the amount of 3-10% by weight based on the paint solid content.
